(19) Europäisches Patentamt
European Patent Office
Office européen des brevets

(11) **EP 1 701 497 A1**

(12) **EUROPEAN PATENT APPLICATION**

(43) Date of publication:
**13.09.2006 Bulletin 2006/37**

(51) Int Cl.:
*H04L 25/03* (2006.01)  *H04L 25/14* (2006.01)

(21) Application number: **06251256.1**

(22) Date of filing: **09.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.03.2005 US 77071**

(71) Applicant: **AGILENT TECHNOLOGIES, INC. (A Delaware Corporation) Palo Alto, CA 94306 (US)**

(72) Inventor: **Moore, George S. Loveland, CO 80537-2400 (US)**

(74) Representative: **Powell, Stephen David et al WILLIAMS POWELL Morley House 26-30 Holborn Viaduct London EC1A 2BP (GB)**

(54) **Method and system for data scrambling and descrambling**

(57)     In systems and methods for randomizing data communicated across a digital interface, a PN sequence is applied to a series of shift registers (141). An array of exclusive-or gates (142) is provided to scramble each bit of the current data word using a respective output of one or several of the shift registers. A second pseudonoise sequence is additionally applied in parallel to another array of exclusive-or gates (143). Additional lines are provided to communicate the PN sequences from the transmitting side to the receiver side. Also, corresponding arrays of exclusive-or gates (152, 153) and shift-registers (151) coupled to the PN sequence lines are disposed on the receiver side to recover the original data using the PN sequences.

FIG. 1

EP 1 701 497 A1

**Description**

The present application is generally related to interface randomization methods and systems and to communicating digital data across an interface.

In multi-bit digital interfaces, it is often advantageous to randomize data patterns communicated across the interfaces. The randomization may be used to eliminate DC content for AC coupled devices or to scramble any data-dependent interference that may be coupled to analog nodes in the system. Digital interfaces associated with analog-to-digital converters (ADCs) and digital-to-analog converters (DACs) are examples of devices that benefit from such randomization. Specifically, in DACs, there is typically a need to eliminate or reduce the effects of input data patterns coupling onto the analog output. Similarly, digital outputs can couple back into the inputs of ADCs.

Known technologies generate a pseudo-noise (PN) sequence to randomize the data stream. Specifically, for each clock tick, a new bit of the PN sequence is generated. Each bit of the current data word being communicated is exclusive-ored with the current bit of the PN sequence. This method also adds an additional data line to communicate the PN sequence to the receiver side of the interface for the recovery of original data. While this method reduces the data-dependent interface, there are still data-dependent couplings that may occur. For example, if the data word is all 0s or all 1s, the pattern on every signal line is the PN sequence or its complement respectively.

Another method involves generating a respective PN sequence for each data line. Upon each clock cycle, the respective data bit on each data line is exclusive-ored with the current bit of the data line's PN sequence. Because a different PN sequence is used for each data line, the scrambled signals are uncorrelated with each other and the coupling is more noise-like. However, to enable the original data to be recovered, additional lines are provided to communicate all of the PN sequences to the receiver side. Accordingly, the number of lines required by this method are doubled.

Some representative embodiments are directed to systems and methods for randomizing data communicated across a digital interface. In some representative embodiments, a PN sequence is applied to a series of shift registers. An array of exclusive-or gates is provided to scramble each bit of the current data word using a respective output of one or several of the shift registers. In some embodiments, a second pseudo-noise sequence is additionally applied in parallel to another array of exclusive-or gates. Additional lines are provided to communicate the PN sequences from the transmitting side to the receiver side. Also, corresponding arrays of exclusive-or gates coupled to the PN sequence lines are disposed on the receiver side to recover the original data using the PN sequences. By scrambling the communicated data in this manner, the scrambled data streams may be approximated as random and independent of the signal data. Additionally, an asymptotic improvement factor of 4 is achieved for the worst case power coupling for large numbers of data lines as compared to known techniques. Moreover, only one or two additional lines are added to the interface.

FIGURE 1 depicts a system for communicating digital data according to one representative embodiment.

FIGURE 2 depicts another system for communicating digital data according to one representative embodiment.

FIGURES 3 and 4 depict an analog-to-digital converter and a digital-to-analog converter according to some representative embodiments.

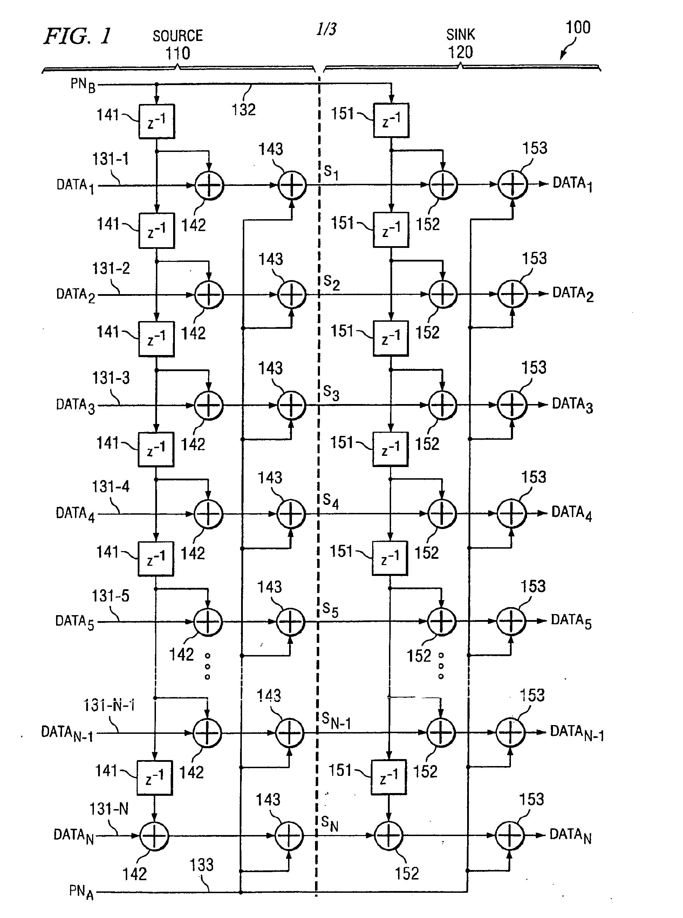

Referring now to the drawings, FIGURE 1 depicts system 100 for communicating digital data from source functionality 110 to sink functionality 120 according to one representative embodiment. The dash line in FIGURE 1 represents the interface between source functionality 110 and sink functionality 120. Within system 100, there are N lines (131-1 through 131-N) to communicate the respective bits (denoted by Data, - Data$_N$) of a data word between the source and sink sides of the interface. Additionally, there are two lines 132 and 133 to communicate PN sequences (denoted by PN$_B$ and PN$_A$ respectively).

Upon each clock cycle, a bit of the PN$_B$ sequence is received on line 132. The bits are communicated serially through shift registers 141. A plurality of exclusive-or gates 142 perform an exclusive-or operation on each bit of the data word being communicated with a respective output of one of the shift registers 141. Also, upon each clock cycle, a bit of the PN$_A$ sequence is received on line 133. The received bit is applied in parallel to a second set of exclusive-or gates 143 which are also coupled to the respective outputs of the first set of exclusive-or gates 142. System 100 could alternatively be implemented to perform the parallel exclusive-or operations with the PN$_A$ sequence before performing the exclusive-or operations with the PN$_B$ sequence. The outputs (denoted by S$_1$ through S$_N$) of exclusive-or gates 143 form the scrambled bits communicated across the interface. Pipelining delays (not shown) could be applied to the scrambled bits as long as the same operations are applied consistently. Additionally, the discussion has assumed that a single line exists for each data signal and for each PN sequence. However, multiple lines may be employed. For example, two lines could be used for each signal and each PN sequence to support differential signaling.

Line 132 used to receive the PN$_B$ sequence extends across the interface to sink functionality 120. Another set of shift registers 151 are serially coupled to line 132 on the sink side of the interface. Each scrambled data bit is applied to an exclusive-or gate 152 to be exclusive-ored with an output of one of the shift registers 151. Line 133 used to receive the PN$_A$ sequence also extends across the interface to sink functionality 120. A final set of exclusive-or gates 153 exclusive-ors the current bit of the PN$_A$ sequence with the respective bits of the outputs of exclusive-or gates 152 to recover the original data.

The relationship of each scrambled data signal is given by:

$$\tilde{S}_k(m) = \text{Data}_k(m) \oplus PN_A(m) \oplus PN_B(m\text{-}k) \qquad \text{(eq. 1)}$$

where $\oplus$ signifies the exclusive-or operation. The receiving structure on the sink side of the interface is a duplicate of the source side. Hence, the output signal is given by:

$$\text{Data}_k(m) = \text{Data}_k(m) \oplus PN_A(m) \oplus PN_B(m\text{-}k) \oplus PN_A(m) \oplus PN_B(m\text{-}k) \qquad \text{(eq. 2)}$$

Rearranging equation (2), the following is obtained:

$$\text{Data}_k(m) = \text{Data}_k(m) \oplus [PN_A(m) \oplus PN_A(m)] \oplus [PN_B(m\text{-}k) \oplus PN_B(m\text{-}k)] \qquad \text{(eq. 3)}$$

Since $PN_A(m) \oplus PN_A(m) = 0$ and $PN_B(m\text{-}k) \oplus PN_B(m\text{-}k) = 0$, it is seen that the original data is recovered.

The scrambled data communicated across the interface can also be described and implemented as follows:

$$S_k(m) = \text{Data}_k(m) \oplus [PN_A(m) \oplus PN_B(m\text{-}k)] \qquad \text{(eq. 4)}$$

This representation emphasizes that each data bit is exclusive-ored with a scrambling signal that is the exclusive-or of $PN_A$ and a delayed version of $PN_B$. Each scrambling sequence employs a different delay value for $PN_B$.

By suitably selecting the $PN_A$ and $PN_B$ sequences, the scrambled data signals ($S_1$ through $S_N$) can be relatively independent irrespective of the communicated data. A number of choices for the $PN_A$ and $PN_B$ sequences can be made to achieve the desired independence. In one embodiment, the $PN_A$ and $PN_B$ sequences are obtained from respective constituent maximal length shift register sequence (MLSRS) generators of a Gold code generator. With this selection, each scrambling sequence is a different Gold code from the set associated with the generator pair. These codes are known to possess excellent cross-correlation characteristics. In another embodiment, two MLSRS generators of relatively prime lengths (Q and R) may be employed. The resulting sequences are all of the same QR length sequence while being separated in a delay by at least the lesser of Q and R. Other selections may be made depending upon the desired amount of independence for particular applications.

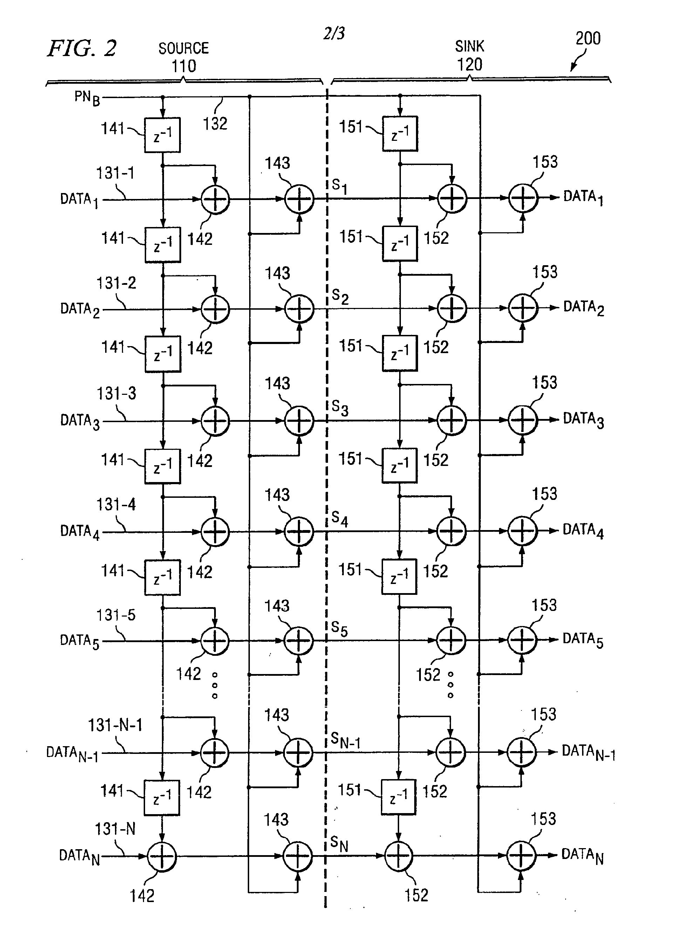

FIGURE 2 depicts system 200 for communicating digital data according to another representative embodiment. System 200 operates in a manner that is substantially similar to the operation of system 100 except that only one PN sequence (the $PN_B$ sequence) is applied to both the serial arrangements of shift registers and the parallel arrangements of exclusive-or gates, Specifically, a single line (line 132) receives the $PN_B$ sequence. Line 132 is coupled serially to shift registers 141 and is coupled in parallel to exclusive-or gates 143 on the source side of the interface. Likewise, line 132 is serially coupled to shift registers 151 and coupled in parallel to exclusive-or gates 153 on the sink side of the interface.

If the $PN_B$ sequence is obtained from a MLSRS generator, the known shift-and-add property of these generators will result in the scrambling sequences being the same sequences at deterministic offsets from one another. For a particular generator, these offsets may be assessed to determine if they are sufficiently separated from one another such that the scrambling sequences may be considered sufficiently independent. Additionally, although a single unit of delay is shown in FIGURE 1 and 2, multiple units of delay may be employed between the shift registers as long as the same pattern of delay is used on the source and sink sides of the interface. Similarly, exclusive-or gates 142 and 152 may perform their exclusive-or operations using the outputs of multiple shift-registers 141 and 151 as long as the same operations are performed on both sides of the interface. With these additional degrees of freedom, the scrambling sequences can be tailored to ensure sufficient independence. Specifically, by obtaining suitable offsets for each data line, the scrambling applied to each data line appears to be independent over the "short term" even though delayed versions of the same sequence are actually being applied to all of the data lines.

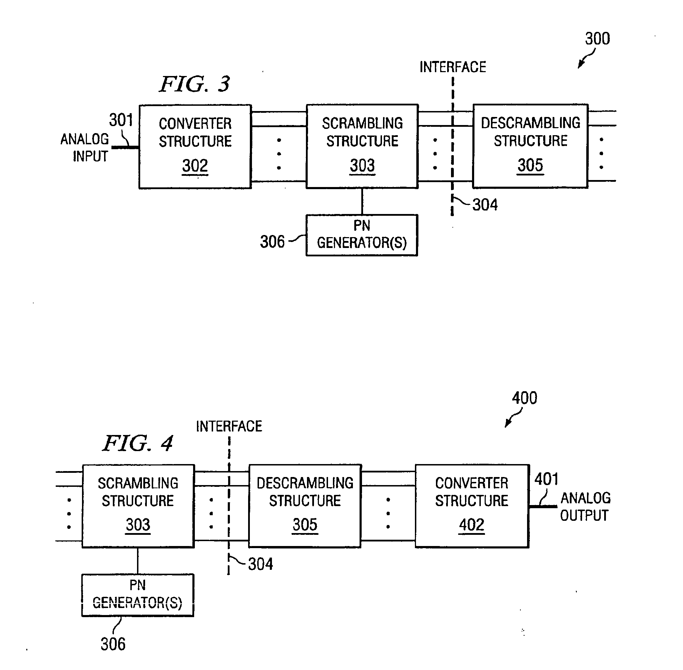

The communication of digital data according to some representative embodiments may occur in any suitable digital device. For example, FIGURE 3 depicts analog-to-digital converter (ADC) 300 according to one representative embodiment. ADC 300 comprises line 301 to receive an analog input signal. ADC 300 comprises typical converter structure 302 that generates digital words related to the levels of the analog input signal. The digital words are scrambled by scrambling structure 303 using PN generator(s) 306. The scrambled data words are communicated across interface 304. Descrambling structure 305 descrambles the data for further processing. By arranging ADC 300 in this manner, line 301 experiences a lower amount of power coupling and the coupling that does occur is more noise-like. Additionally, the scrambling functionality does not unduly increase the number of digital lines in the device and does not involve undue circuit complexity. Similarly, FIGURE 4 depicts digital-to-analog converter (DAC) 400 according to one representative embodiment. DAC 400 operates in substantially the same manner as ADC 300. However, analog output line 401 and converter structure 402 that converts the digital data into an analog signal are disposed after descrambling structure 305.

**Claims**

1. A system comprising:

   a first plurality of shift registers (141) coupled in series to receive a first pseudo-noise (PN) sequence;
   a first array of exclusive-or gates (142) for performing a respective exclusive-or operation on each bit of a data word to be communicated across an interface using said first plurality of shift registers;
   a second array of exclusive-or gates (143), coupled in parallel to receive a second PN sequence, for performing a respective exclusive-or operation on each bit of said data word;
   a second plurality of shift registers (151) coupled in series to receive said first PN sequence;
   a third array of exclusive-or gates (152) for performing a respective exclusive-or operation on each bit of a data word communicated across an interface using said second plurality of shift registers; and
   a fourth array of exclusive-or gates (153), coupled in parallel to receive said second PN sequence, for performing a respective exclusive-or operation on each bit of said communicated data word.

2. The system of claim 1 wherein the first and second PN sequences are the same PN sequence.

3. The system of claim 1 further comprising:

   first and second maximal length shift register sequence (MLSRS) generators of a Gold code generator, wherein said first PN sequence is received from said first MLSRS generator and said second PN sequence is received from said second MLSRS generator.

4. The system of claim 1 further comprising:

   first and second maximal length shift register sequence (MLSRS) generators of relatively prime lengths for generating said first and second PN sequences.

5. The system of claim 1 wherein at least one shift register of both of said first and second plurality of shift registers operates according to multiple units of delay.

6. The system of claim 1 wherein at least one gate of both of said first and third arrays of exclusive-or gates performs an exclusive-or operation using outputs from multiple shift-registers.

7. A method, comprising:

   applying a first pseudo-noise (PN) sequence to a first plurality and a second plurality of serially coupled shift registers (141, 151);
   performing a first exclusive-or operation on each bit ($DATA_1$ - $DATA_N$) of a digital word using said first plurality of shift registers and a second exclusive-or operation on each bit of said digital word using a current bit of a second PN sequence to generate a scrambled digital word;
   communicating bits ($S_1$ - $S_N$) of said scrambled digital word across an interface in parallel; and
   performing a third exclusive-or operation on each bit of said scrambled digital word using said second plurality of shift registers and a fourth exclusive-or operation on each bit of said scrambled digital word using said current bit of said second PN sequence to recover said digital word.

8. The method of claim 7, further comprising:

generating said first PN sequence using a first maximal length shift register sequence (MLSRS) generator of a Gold code generator; and

generating said second PN sequence using a second MLSRS generator of said Gold code generator.

9. The method of claim 7 wherein at least one shift register of both of said first and second plurality of shift registers operates according to multiple units of delay.

10. The method of claim 7 wherein at least one bit of said data word is exclusive-ored with multiple outputs of said first plurality of shift registers and at least one bit of said scrambled data word is exclusive-ored with multiple outputs of said second plurality of shift registers.

FIG. 1

FIG. 2

SOURCE 110   2/3   SINK 120   200

*FIG. 3*

*FIG. 4*

European Patent
Office

**EUROPEAN SEARCH REPORT**

Application Number

EP 06 25 1256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 807 290 A (POSPISCHIL ET AL) 21 February 1989 (1989-02-21) * abstract * * column 1, line 17 - line 30 * * figure 2 * ----- | 1-10 | INV. H04L25/03 ADD. H04L25/14 |
| A | US 4 669 118 A (POSPISCHIL ET AL) 26 May 1987 (1987-05-26) * abstract * * column 1, line 13 - line 27 * * figure 2 * ----- | 1-10 | |
| A | WO 97/27694 A (TELEFONAKTIEBOLAGET LM ERICSSON ; FORSBERG, GUNNAR) 31 July 1997 (1997-07-31) * abstract * * figures 2,4 * ----- | 1-10 | |
| A | US 5 377 265 A (WETTENGEL ET AL) 27 December 1994 (1994-12-27) * abstract; figures 2,4 * ----- | 1-10 | TECHNICAL FIELDS SEARCHED (IPC) |
| A | EP 0 858 170 A (AGILENT TECHNOLOGIES, INC. ; HEWLETT-PACKARD COMPANY) 12 August 1998 (1998-08-12) * abstract * ----- | 1-10 | H04L |
| A | US 2002/126839 A1 (HAQUE YUSUF A ET AL) 12 September 2002 (2002-09-12) * abstract * ----- | 1-10 | |

The present search report has been drawn up for all claims

| Place of search | Date of completion of the search | Examiner |
|---|---|---|
| The Hague | 30 May 2006 | Koukourlis, S |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)

EP 1 701 497 A1

## ANNEX TO THE EUROPEAN SEARCH REPORT
## ON EUROPEAN PATENT APPLICATION NO.

EP 06 25 1256

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2006

| Patent document cited in search report | | Publication date | Patent family member(s) | | Publication date |
|---|---|---|---|---|---|
| US 4807290 | A | 21-02-1989 | AU | 564555 B2 | 13-08-1987 |
| | | | AU | 3930685 A | 27-08-1985 |
| | | | CA | 1225710 A1 | 18-08-1987 |
| | | | DE | 3403650 A1 | 08-08-1985 |
| | | | WO | 8503612 A1 | 15-08-1985 |
| | | | EP | 0150862 A2 | 07-08-1985 |
| | | | JP | 61500407 T | 06-03-1986 |
| | | | NO | 853844 A | 30-09-1985 |
| US 4669118 | A | 26-05-1987 | AU | 564554 B2 | 13-08-1987 |
| | | | AU | 3930585 A | 27-08-1985 |
| | | | CA | 1225709 A1 | 18-08-1987 |
| | | | DE | 3403639 A1 | 08-08-1985 |
| | | | WO | 8503611 A1 | 15-08-1985 |
| | | | EP | 0150861 A2 | 07-08-1985 |
| | | | JP | 61500406 T | 06-03-1986 |
| | | | NO | 853845 A | 30-09-1985 |
| WO 9727694 | A | 31-07-1997 | AU | 1563097 A | 20-08-1997 |
| | | | SE | 9600256 A | 25-07-1997 |
| | | | TW | 393835 B | 11-06-2000 |
| US 5377265 | A | 27-12-1994 | AT | 185033 T | 15-10-1999 |
| | | | DE | 4202682 A1 | 05-08-1993 |
| | | | EP | 0553648 A1 | 04-08-1993 |
| | | | ES | 2136625 T3 | 01-12-1999 |
| EP 0858170 | A | 12-08-1998 | DE | 69812742 D1 | 08-05-2003 |
| | | | DE | 69812742 T2 | 05-02-2004 |
| | | | JP | 10261960 A | 29-09-1998 |
| | | | US | 5793318 A | 11-08-1998 |
| US 2002126839 | A1 | 12-09-2002 | NONE | | |

For more details about this annex : see Official Journal of the European Patent Office, No. 12/82